# EUROPEAN PATENT SPECIFICATION

(11) **EP 4 443 617 B1**
(45) Date of publication and mention of the grant of the patent: **11.03.2026**
(21) Application number: 22925122.8
(22) Date of filing: 19.12.2022
(51) Int. Cl.: H01M 50/20, H01M 50/502, H01M 50/591, H01M 50/211, H01M 10/052, H01M 50/296, H01M 50/298

(54) **BATTERY MODULE**
BATTERIEMODUL
MODULE DE BATTERIE

(30) Priority: 07.02.2022 KR 20220015839
(43) Date of publication of application: 09.10.2024
(73) Proprietor: LG Energy Solution, Ltd., Seoul 07335 (KR)
(72) Inventor: AN, Hyuk, Daejeon 34122 (KR); LEE, Hee Su, Daejeon 34122 (KR); KIM, Dae Gil, Daejeon 34122 (KR)
(74) Representative: Plasseraud IP
(86) International application number: PCT/KR2022/020738
(87) International publication number: WO 2023/149655

(56) References cited:
- EP-A1- 3 671 903
- EP-A2- 0 892 450
- CN-A- 109 888 159
- CN-U- 213 936 367
- KR-A- 20110 133 256
- KR-A- 20200 112 934
- KR-B1- 102 018 720

## Description

### TECHNICAL FIELD

### CROSS-REFERENCE TO RELATED APPLICATION

The present application claims the benefit of the priority of Korean Patent Application No. 10-2022-0015839, filed on February 07, 2022.

### TECHNICAL FIELD

The present invention relates to a battery module, and more particularly, to a battery module of a secondary battery.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries storing electrical energy may be generally classified into primary batteries and a secondary batteries. Such a primary battery is a disposable consumable battery. On the other hand, such a secondary battery is a chargeable battery that is manufactured by using a material in which oxidation and reduction processes between current and the material are capable of being repeated. That is, when the reduction reaction to the material is performed by the current, power is charged. When the oxidation reaction to the material is performed by the current, power is discharged. Such charging-discharging are repeatedly performed to generate electricity.

Secondary batteries, which are used as energy sources for various electronic devices that are indispensably used in modern society, are increasing in capacity due to an increase in usage and complexity of mobile devices and the development of electric vehicles. A plurality of cells are arranged in a small device to satisfy user demand, but a battery module electrically connecting a plurality of cells or a battery pack provided with a plurality of battery modules is used in a vehicle or the like.

When a battery pack is configured by connecting a plurality of cells in series/parallel, a battery module constituted by at least one cell is configured first, and other components are added using the at least one battery module to constitute the battery pack. Here, the battery module may include a cell stack in which a plurality of cells are stacked, a frame accommodating the cell stack, and an end plate covering each of front and rear surfaces of the cell stack.

In the related art, a separate component for protecting a connector protruding from the battery module to the outside of the end plate against external factors has been used. Thus, a problem in which efficiency of a process is reduced, and a cost for a separate component is added has been occurred. In addition, a problem in which there is a lot of movement of a wire during transfer of the battery module has been also occurred.

EP 3671903A1 and KR 102 018 720B1 relates to a battery module. EP 0892450A2 relates to a cooling device that cools battery power source by air cooling. CN109888159A relates to a power battery soft-pack module.
KR 2011 0133256A relates to a battery pack.

In order to solve the problems, a battery module including a different type of end plate is required.

### DISCLOSURE OF THE INVENTION

### TECHNICAL PROBLEM

The present invention has been made to solve the above problems, and an object of the present invention is to provide a battery module including an edge plate, in which a separate component for accommodating a connector is deleted to simplify a process of assembling a battery module, and a manufacturing cost is reduced to improve efficiency of the process, and also, when the battery module is shipped, movement of the connector and a wire is restricted, and foreign substances are prevented from being inserted to improve quality and stability of a product.

### TECHNICAL SOLUTION

A battery module according to the present invention includes a cell stack in which a plurality of cells are stacked, a frame in which the cell stack is accommodated, an end plate configured to block an opening of the frame and disposed on one surface and the other surface of the cell stack, a connector disposed outside the frame to electrically connect the cell stack to the outside, and a wire configured to connect the cell stack to the connector, wherein, in the end plate, a connector accommodation groove in which the connector is accommodated is formed in the other surface facing one surface adjacent to the cell stack.

The end plate may include a rib extending in a direction away from the cell stack from the end plate so that the connector accommodation groove is formed.

An edge of the rib may be processed to be rounded.

The rib may be made of an elastic material.

The end plate may be formed so that the connector accommodation groove is recessed in a shape corresponding to a shape of the connector.

The end plate may be formed so that the connector accommodation grooves are provided in plurality, and the plurality of connector accommodation grooves are adjacent to each other side by side.

The end plate further includes a wire accommodation groove, in which the wire is accommodated, in the other surface facing one surface adjacent to the cell stack.

The end plate may be formed to connect the connector accommodation groove to the wire accommodation groove.

In the end plate, the connector accommodation groove may be formed to accommodate the connector so that one surface of the connector, to which one end of the wire is connected, is directed to a direction away from the cell stack.

In the end plate, the connection accommodation groove may be formed to accommodate the connector so that one surface of the connector, to which one end of the wire is connected, is directed to the other end of the wire.

The end plate may further include an accommodation plate extending to be perpendicular to a direction away from the cell stack so as to protect a portion of the inserted connector.

### ADVANTAGEOUS EFFECTS

The battery module according to the present invention may include the cell stack in which the plurality of cells are stacked, the frame in which the cell stack is accommodated, the end plate that blocks the opening of the frame and is disposed on one surface and the other surface of the cell stack, the connector disposed outside the frame to electrically connect the cell stack to the outside, and the wire connecting the cell stack to the connector, and the end plate may have the connector accommodation groove in which the connector is accommodated in the outer surface facing the one surface adjacent to the cell stack.

Therefore, the present invention may provide the battery module including the edge plate, in which the separate component for accommodating the connector is not required to simplify the process of assembling the battery module, and the manufacturing cost is reduced to improve the efficiency of the process, and also, when the battery module is shipped, the movement of the connector and the wire is restricted, and the foreign substances are prevented from being inserted to improve the quality and stability of the product.

### BRIEF DESCRIPTION OF THE DRAWINGS

FIG. 1 is a schematic perspective view illustrating a battery module according to Embodiment 1 of the present disclosure.
FIG. 2 is a schematic enlarged view illustrating the battery module according to Embodiment 1 of the present disclosure.
FIG. 3 is a schematic perspective view illustrating an end plate of the battery module according to Embodiment 1 of the present disclosure.
FIG. 4 is a schematic perspective view illustrating an end plate in which a connector of the battery module is accommodated according to Embodiment 1 of the present disclosure.
FIG. 5 is a schematic perspective view illustrating an end plate in which a connector and a wire of a battery module are accommodated according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

The present disclosure provides a battery module as Embodiment 1.

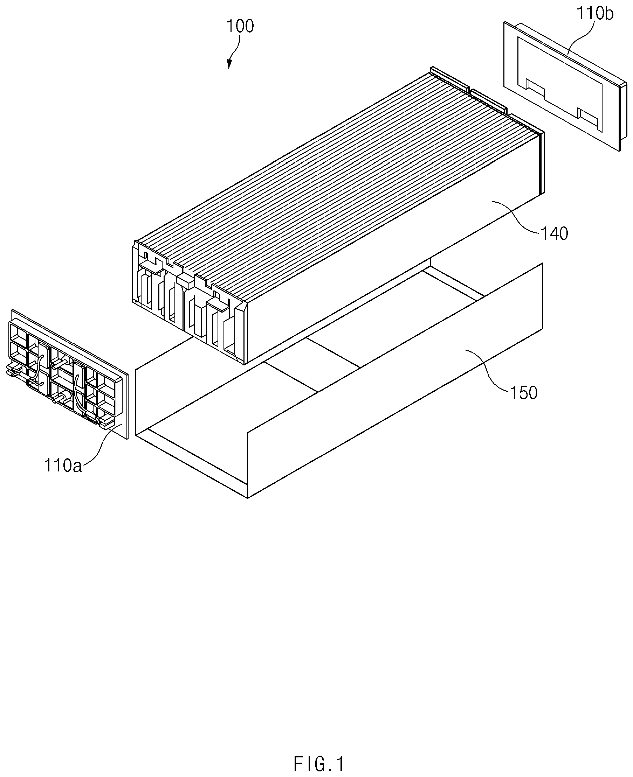

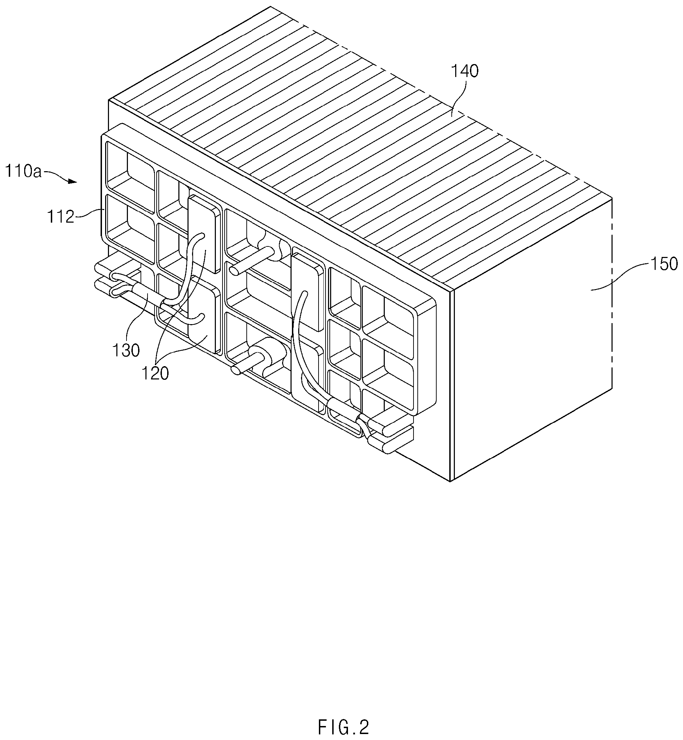

FIG. 1 is a schematic perspective view illustrating a battery module 100 according to Embodiment 1 of the present disclosure, and FIG. 2 is a schematic enlarged view illustrating the battery module 100 according to Embodiment 1 of the present disclosure.

Referring to FIGS. 1 and 2, a battery module 100 according to Embodiment 1 of the present disclosure includes a cell stack 140, a frame 150, end plates 110a and 110b, a connector 120, and a wire 130. Particularly, the cell stack 140 may be disposed inside the frame 150 and be disposed so that the end plates 110a and 110b block an opening of the frame 150. Also, the connector 120 and the cell stack 140 may be connected to each other through the wire.

The cell stack 140 may be formed by stacking a plurality of cells having a specific number in parallel to each other. A cell may be a basic unit of a battery capable of being used by charging and discharging electrical energy and may include a positive electrode, a negative electrode, a separator, and the like. Although not specifically mentioned in the present disclosure, a busbar capable of electrically connecting electrode leads of the cell to each other may be disposed on each of both sides of the cell stack 140.

As an example of a configuration for accommodating the cell stack 140, the battery module 100 according to Embodiment 1 of the present disclosure may include the frame 150.

The frame 150 may accommodate the cell stack 140 therein, and a shape of the frame 150 may vary according to a size and shape of the cell stack 140 to be accommodated. In various shapes, the frame 150 according to Embodiment 1 of the present disclosure may have a U-shape capable of covering three surfaces of the cell stack 140. However, the shape of the frame 150 is not limited thereto.

The cell stack 140 may be protected from the outside by the frame 150 and be maintained in a constant shape.

As an example of a configuration for blocking the opening of the frame 150, the battery module 100 according to Embodiment 1 of the present disclosure may include the end plates 110a and 110b.

As described above, when the cell stack 140 is accommodated in the U-shaped frame 150, two surfaces of the cell stack 140 except for a top surface may be not be wrapped by the frame 150 due to the opening of the frame 150. That is, the end plates 110a and 110b may be respectively disposed on one surface and the other surface of the cell stack 140 that is not wrapped by the frame 150. The end plates 110a and 110b will be described later.

As an example of a configuration for connecting electrical energy of the cell stack 140 to the outside, the battery module 100 according to Embodiment 1 of the present disclosure may include the connector 120.

The connector 120 may be disposed outside the frame 150 to be connected to the outside. The connector 120 may generally have a rectangular parallelepiped shape, but is not limited thereto, and any shape required for the connection to the outside is sufficient.

As an example of a configuration for connecting the cell stack 140 and the connector 120 to each other, the battery module 100 according to Embodiment 1 of the present disclosure may include the wire 130.

The wire 130 may include an electric wire capable of moving electrical energy therein, and the outside of the wire 130 may be wrapped by an insulating material. In addition, the wire 130 may have a generally long cylindrical shape, but is not necessarily limited thereto.

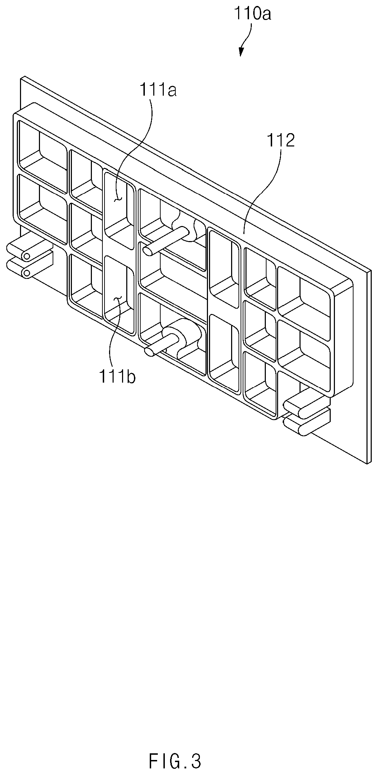

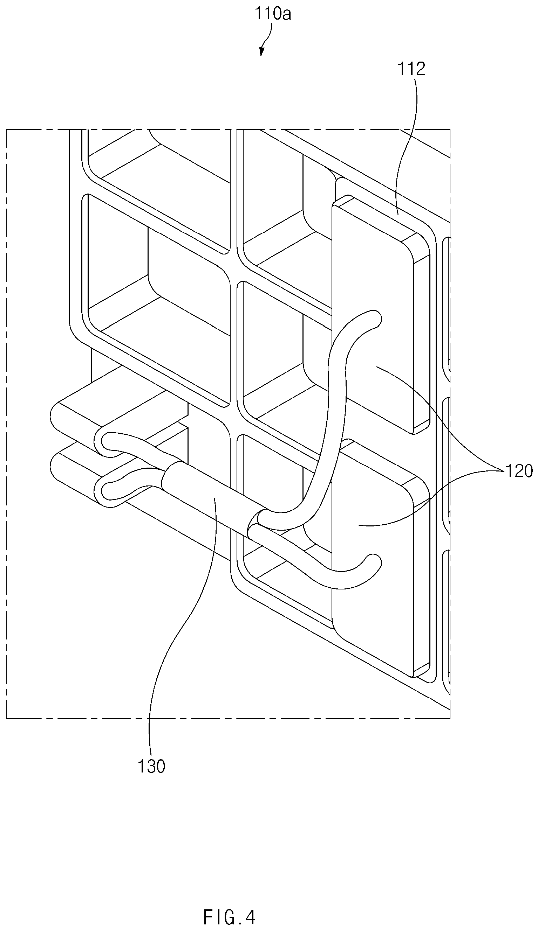

FIG. 3 is a schematic perspective view illustrating the end plate 110a of the battery module according to Embodiment 1 of the present disclosure, and FIG. 4 is a schematic perspective view illustrating the end plate 110a in which the connector 120 of the battery module 100 is accommodated according to Embodiment 1 of the present disclosure.

Referring to FIGS. 3 and 4, as an example of a configuration for accommodating the connector 120 disposed outside the frame 150 by protruding to the outside of the frame 150, connector accommodation grooves 111a and 111b are formed in the end plates 110a and 110b of the battery module 100 according to Embodiment 1 of the present disclosure.

The connector accommodation grooves 111a and 111b are spaces in which the connector 120 is capable of being accommodated. Each of the end plates 110a and 110b may be provided in a shape that is recessed to form a space in which the connector 120 is capable of being accommodated and in a space including a rib protruding to the outside.

The connector accommodation grooves 111a and 111b may be formed on the end plates 110a and 110b as many as the number of connectors 120 included in the battery module 100. However, the plurality of connector accommodation grooves 111a and 111b may be formed so as to be applied to various battery modules 100 having different numbers of connectors 120.

Each of the connector accommodation grooves 111a and 111b may be formed in a shape in which the entire connector 120 is inserted and accommodated, or a portion of the connector 120 is accommodated in an inserted state. When a portion of the connector 120 is accommodated in the inserted state, each of the connector accommodation grooves 111a and 111b may have a volume greater than that of the connector 120.

As an example of the shape for forming the connector accommodation grooves 111a and 111b, the end plates 110a and 110b of the battery module 100 according to Embodiment 1 of the present disclosure may include a rib 112.

The rib 112 may extend in a direction, which is away from the cell stack 140, from the end plates 110a and 110b to form the connector accommodation grooves 111a and 111b. Since the rib 112 extend in a direction away from the cell stack 140, a surface of each of the end plates 110a and 110b facing the cell stack 140 may have a relatively simple structure and be formed as a flat surface. Thus, structural stability of the battery module 100 as a whole may be improved.

The rib 112 may be formed in a shape that a plurality of thin plates protrude, and the shape of the rib 112 may be different depending on the shape and number of the connector accommodation grooves 111a and 111b. However, the shape of the rib 112 is not limited and may vary. For example, the rib 112 may have any shape that is capable of forming the connector accommodation grooves 111a and 111b.

Referring to FIG. 3, the rib 112 may have a shape of which an edge is processed to be rounded. All edges of the rib 112 may be processed to be rounded, or only the edges of the rib 112 forming spaces such as the connector accommodation grooves 111a and 111b in which the connector 120 is accommodated may be processed to be rounded.

If the edge of the rib 112 is processed to be rounded, possibility of damage occurring when the connector 120 and the wire 130 collide with the rib 112 may be reduced, and it may be advantageous for inserting the connector 120 structurally.

As an example of a configuration advantageous for accommodating the connector 120, the rib 112 included in the end plate 110a of the battery module 100 according to Embodiment 1 of the present disclosure may be made of an elastic material.

If the rib 112 of each of the end plates 110a and 110b is made of an elastic material, when the connector 120 is inserted to be accommodated in the connector accommodation grooves 111a and 111b, the shape of the rib 112 may be deformable, and thus, the insertion of the connector 120 may be easy. In addition, since the rib 112 made of an elastic material has a property of returning to its original shape after being deformed, the rib 112 may press a portion of the connector 120 inserted into each of the connector accommodation grooves 111a and 111b. Therefore, a portion of the connector 120 inserted into the connector accommodation grooves 111a and 111b may be pressed, and thus, even when the battery module 100 is transferred, the connector 120 may be maintained in the state of being stably accommodated into the connector accommodation grooves 111a and 111b.

As an example of a configuration advantageous for the connector 120 to be inserted into the connector accommodation grooves 111a and 111b, the end plates 110a and 110b of the battery module 100 according to Embodiment 1 of the present disclosure may be formed so that each of the connector accommodation grooves 111a and 111b is recessed in a shape corresponding to that of the connector 120.

Particularly, the connector accommodation grooves 111a and 111b may have the recessed shape so that inner surfaces of the connector accommodation grooves 111a and 111b correspond to an outer surface of the connector 120.

If the recessed shape of the connector accommodation grooves 111a and 111b correspond to that of the connector 120, the connector 120 may be easily inserted into each of the connector accommodation grooves 111a and 111b. In addition, if the connector accommodation grooves 111a and 111b are formed so that an empty space is not almost formed between the connector 120 and the rib 112 constituting the connector accommodation grooves 111a and 111b in the state in which the connector 120 is inserted into each of the connection accommodation grooves 111a and 111b, the connector 120 may not be easily removed in the state of being accommodated in each of the connector accommodation grooves 111a and 111b and thus be advantageous for accommodating the connector 120.

As an example of a configuration that easily accommodates the plurality of connectors 120, the end plates 110a and 110b of the battery module 100 according to Embodiment 1 of the present disclosure may be formed so that the plurality of connector accommodation grooves 111a and 111b are adjacent to be parallel to each other.

The battery module 100 may include the plurality of connectors 120, and the number of connectors 120 may vary. When the battery module 100 includes the plurality of connectors 120, the plurality of connector accommodation grooves 111a and 111b may be formed in the end plates 110a and 110b to accommodate all of the plurality of connectors 120.

The plurality of connector accommodation grooves 111a and 111b may be formed in various shapes on the end plates 110a and 110b. For example, the plurality of connector accommodation grooves 111a and 111b may be formed to be adjacent to each other side by side.

Referring to FIG. 4, when the battery module 100 includes two connectors 120 at one end, two connector accommodation grooves 111a and 111b may be formed in one end of the end plate 110a. In this case, the two connector accommodation grooves 111a and 111b may be formed adjacent to each other in a vertical direction on a surface of the end plate 110a.

When the plurality of connector accommodation grooves 111a and 111b are formed to be adjacent to each other side by side, the wires 130 respectively connected to the connectors 120 may be formed without a large difference in length, and thus, the process may be efficient. In the state in which the connector 120 is accommodated in each of the connector accommodation grooves 111a and 111b, the wire 130 may be stably fixed to reduce movement of the wire 130. As a result, when the battery module 100 is transferred, the connector 120 and the wire 130 may be maintained in a relatively stable state.

A direction in which the connector 120 is inserted into each of the connector accommodation grooves 111a and 111b may vary. In various insertion shapes of the connector 120, the connector 120 may be accommodated in each of the end plates 110a and 110b of the battery module 100 according to Embodiment 1 of the present disclosure so that one surface of the connector 120, to which one end of the wire 130 is connected, is directed to a direction away from the cell stack 140.

When the connector 120 is inserted into each of the connector accommodation grooves 111a and 111b as described above, the connector accommodation grooves 111a and 111b may be formed so that one surface of the connector 120, to which one end of the wire 130 is connected, is directed to a direction away from the cell stack 140.

Specifically, referring to FIG. 4, the direction in which the connector 120 is inserted to be accommodated in each of the connector accommodation grooves 111a and 111b may be a direction that gradually approaches the cell stack 140 and may be inserted into the connector accommodation grooves 111a and 111b while the connector 120 moves to this direction. Thus, after the connector 120 is inserted into each of the connector accommodation grooves 111a and 111b, the connector 120 may be accommodated into each of the connector accommodation grooves 111a and 111b in the state in which one surface of the connector 120, to which one end of the wire 130 is connected, is directed in the direction away from the cell stack 140.

If the connector 120 is accommodated in each of the connector accommodation grooves 111a and 111b in this manner, when an operator inserts the connector 120 into each of the connector accommodation grooves 111a and 111b or removes the connector 120 from the connector accommodation grooves 111a and 111b, the connector may be easily handled.

In the battery module 100 according to Embodiment 1 of the present disclosure, the connector accommodation grooves 111a and 111b for accommodating the connector 120 may be formed in the end plates 110a and 110b, and thus, the separate component for accommodating the connector 120 may not be required. Thus, since the assembly process of the battery module 100 is simplified, and the manufacturing cost is reduced, the process efficiency may be improved, and when the battery module is shipped, movement of the connector and the wire may be restricted, and foreign substances may be prevented from being inserted to improve quality and stability of a product.

### Embodiment 2

The present invention provides a battery module as Embodiment 2.

Hereinafter, detailed descriptions of components that are same as those of the battery module 100 according to Embodiment 1 of the present disclosure will be omitted.

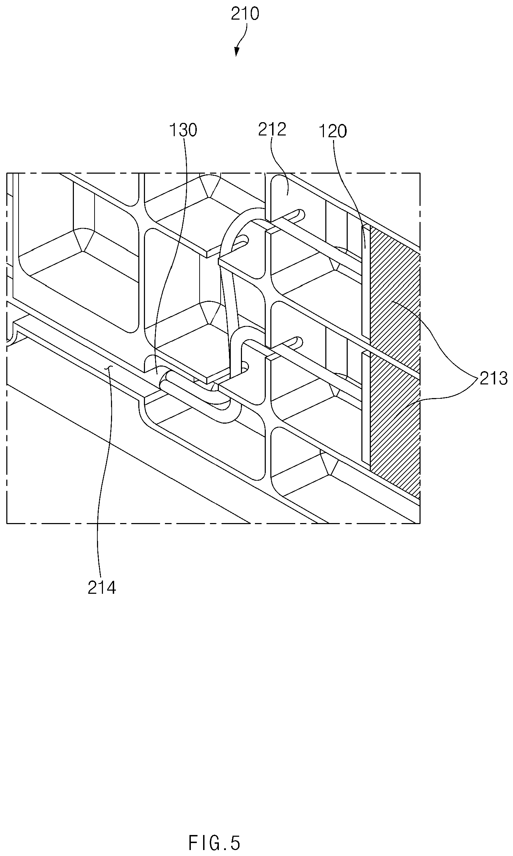

FIG. 5 is a schematic perspective view illustrating an end plate 210 in which a connector 120 and a wire 130 of a battery module 200 are accommodated according to Embodiment 2 of the present invention.

The battery module 200 according to Embodiment 2 of the present invention includes a cell stack 140, a frame 150, an end plate 210, a connector 120, and a wire 130. Specifically, the cell stack 140 is disposed inside the frame 150, and the end plate 210 blocks an opening of the frame 150. Also, the connector 120 and the cell stack 140 are connected to each other through the wire.

In various insertion forms for accommodating the connector 120, as an example of a configuration in which the connector 120 is stably accommodated, the connector 120 may be accommodated in the end plate 210 of the battery module 200 according to Embodiment 2 of the present invention so that one surface of the connector 120, to which one end of the wire 130 is connected, is directed to the other end of the wire 130.

When the connector 120 is inserted into the connector accommodation groove in the above form, the connection accommodation groove may be formed to accommodate the connector 120 so that one surface of the connector 120, to which one end of the wire 130 is connected, is directed to the other end of the wire 130.

Specific example, for example, when the end plate 210 is viewed from the front, the wire 130 extending from a left side to a right side may be connected to the connector 120. In this case, the meaning that one surface of the connector 120, to which one end of the wire 130 is connected, is directed to the other end of the wire 130 may be the same as the meaning of facing the left side.

When the connector 120 is accommodated in the connector accommodation groove in this form, since the direction in which the wire 130 extends and the direction in which the connector 120 is inserted are the same, the connector 120 may be accommodated to be relatively stable.

When the connector 120 is accommodated so that one side of the connector 120 to which one end of the wire 130 is connected is directed to the other end of the wire 130, as an example of a configuration that assists in the stable accommodation of the connector 120, the end plate 210 of the battery module 200 according to Embodiment 2 of the present invention may further include an accommodation plate 213.

The accommodation plate 213 may extend to be perpendicular to a direction away from the cell stack 140 to protect a portion of the inserted connector 120. Specifically, the accommodation plate 213 may be disposed to be parallel to the end plate 210.

The accommodation plate 213 may be disposed to be in contact with a portion of the rib 212 forming the connector accommodation groove, and a portion of the accommodated connector 120 may be covered by the accommodation plate 213. That is, four surfaces of the connector 120 accommodated in the connector accommodation groove may be in contact with the rib 212 and the accommodation plate 213.

The connector 120 may be stably accommodated in the connector accommodation groove by the accommodation plate 213 and may be protected from the outside.

The battery module 200 of the present invention may be a configuration disposed outside the frame 150 and may include a connector 120 and a wire 130. As an example of a configuration for accommodating the wire 130 of the configurations disposed outside the frame 150, the end plate 210 of the battery module 200 according to Embodiment 2 of the present invention further has a wire accommodation groove 214.

The wire accommodation groove 214 is formed on the same surface as the connector accommodation groove is formed in the end plate 210. Particularly, the wire accommodation groove 214 is formed so that the wire 130 is accommodated on the other surface facing one surface of the surfaces of the end plate 210, which is adjacent to the cell stack 140.

The wire accommodation groove 214 is a space in which the wire 130 is capable of being accommodated. The end plate 210 may be provided in a shape that is recessed to form a space in which the wire 130 is capable of being accommodated and in a space including the rib protruding to the outside.

The wire accommodation groove 214 may be formed in the end plate 210 as many as the number of wires 130 included in the battery module 100. However, as illustrated in FIG. 5, the wire 130 may have a shape of which a central portion is merged into one. That is, one end and the other end of the wire 130 are divided into several pieces according to the number of connectors 120, but a specific central portion of the wire 130 may be merged to have a single cylindrical shape. In this case, only one wire accommodation groove 214 may be formed in the other surface of the end plate 210.

When the wire accommodation groove 214 is formed in the end plate 210, movement of the wire may be suppressed when the battery module 200 is transferred while not only the connector 120 but also the wire 130 are accommodated, and thus, an effect of increasing in stability of the battery module 200 may be occur.

As an example of a configuration for stably accommodating the connector 120 and the wire 130, the battery module 200 according to Embodiment 2 of the present invention is formed so that the connector accommodation groove and the wire accommodation groove 214 are connected to each other.

Particularly, an additional opening may be formed so that the wire 130 is accommodated in the common rib 212 that simultaneously forms the connector accommodation groove and the wire accommodation groove 214, and thus, the connector accommodation groove and the wire accommodation groove 214 may be formed to be connected to each other. That is, a portion of the wire 130 including one end of the wire 130 connected to one surface of the connector 120 may be additionally fixed by the opening formed in the rib 212.

If the connector accommodation groove and the wire accommodation groove 214 are formed to be connected to each other, the connector 120 and the wire 130 may be more stably accommodated, and thus, when the battery module 100 is transferred for reasons such as shipment, since the connector 120 and the wire 130 are stably fixed, the effect of increasing in stability of the product may occur. Also, the shape in which the connector 120 and the wire 130 are accommodated may be relatively stable.

While the Embodiment 2 of the present invention has been described with reference to the specific embodiments, it will be apparent to those skilled in the art that various changes and modifications may be made without departing from the scope of the invention as defined in the following claims.

### [Description of the Symbols]

100: Module
110a, 110b, 210: End plate
111a, 111b: Connector accommodation groove
112, 212: Rib
120: Connector
130: Wire
140: Cell stack
150: Frame
213: Accommodation plate
214: Wire accommodation groove

## Claims

1. A battery module (100) comprising:
a cell stack (140) in which a plurality of cells are stacked;
a frame (150) in which the cell stack (140) is accommodated;
an end plate (210) configured to block an opening of the frame (150) and disposed on one side and the other surface of the cell stack (140);
a connector (120) disposed exterior to the frame (150) to electrically connect the cell stack (140) to an outside; and
a wire (130) configured to connect the cell stack (140) to the connector (120),
wherein, in the end plate (210), a connector accommodation groove (111a, 111b) in which the connector (120) is accommodated is formed in the other surface facing one surface adjacent to the cell stack (140), and the end plate (210) further comprises a wire accommodation groove (214), in which the wire is accommodated, in the other surface facing one surface adjacent to the cell stack (140).

2. The battery module (100) of claim 1, wherein the end plate (210) comprises a rib (112, 212) extending in a direction away from the cell stack (140) from the end plate (210) so that the connector accommodation groove (111a, 111b) is formed.

3. The battery module (100) of claim 2, wherein an edge of the rib (112, 212) is processed to be rounded.

4. The battery module (100) of claim 2, wherein the rib (112, 212) is made of an elastic material.

5. The battery module (100) of claim 1, wherein the end plate (210) is formed such that the connector accommodation groove (111a, 111b) is recessed in a shape corresponding to a shape of the connector (120).

6. The battery module (100) of claim 1, wherein the end plate (210) is formed such that the connector accommodation grooves (111a, 111b) are provided in a plurality, and the plurality of connector accommodation grooves (111a, 111b) are adjacent to each other side by side.

7. The battery module (100) of claim 1, wherein the end plate (210) is formed so as to connect the connector accommodation groove (111a, 111b) to the wire accommodation groove (214).

8. The battery module (100) of claim 1, wherein, in the end plate (210) , the connector accommodation groove (111a, 111b) is formed so as to accommodate the connector (120) such that one surface of the connector (120), to which one end of the wire (130) is connected, is directed to a direction away from the cell stack (140).

9. The battery module (100) of claim 1, wherein, in the end plate (210) , the connection accommodation groove (111a, 111b) is formed so as to accommodate the connector (120) such that one surface of the connector (120), to which one end of the wire (130) is connected, is directed to the other end of the wire (130).

10. The battery module (100) of claim 9, wherein the end plate (210) further comprises an accommodation plate (213) extending to be perpendicular to a direction away from the cell stack (140) so as to protect a portion of the inserted connector (120).

## Patentansprüche

1. Batteriemodul (100), umfassend:
einen Zellenstapel (140), in welchem eine Mehrzahl von Zellen gestapelt sind;
einen Rahmen (150), in welchem der Zellstapel (140) aufgenommen ist;
eine Endplatte (210), welche dazu eingerichtet ist, eine Öffnung des Rahmens (150) zu blockieren und an einer Seite und der anderen Fläche des Zellstapels (140) angeordnet ist;
einen Konnektor (120), welcher außerhalb des Rahmens (150) angeordnet ist, um den Zellstapel (140) mit einem Äußeren elektrisch zu verbinden; und
eine Leitung (130), welche dazu eingerichtet ist, den Zellstapel (140) mit dem Konnektor (120) zu verbinden,
wobei, in der Endplatte (210), eine Konnektoraufnahmenut (111a, 111b), in welche der Konnektor (120) aufgenommen ist, in der anderen Fläche gebildet ist, welche einer Fläche zugewandt ist, welche benachbart zu dem Zellstapel (140) ist, und die Endplatte (210) ferner in der anderen Fläche, welche einer Fläche zugewandt ist, welche benachbart zu dem Zellstapel (140) ist, eine Leitungsaufnahmenut (214) umfasst, in welcher die Leitung aufgenommen ist.

2. Batteriemodul (100) nach Anspruch 1, wobei die Endplatte (210) eine Rippe (112, 212) umfasst, welche sich in einer Richtung weg von dem Zellstapel (140) von der Endplatte (210) erstreckt, so dass die Konnektoraufnahmenut (111a, 111b) gebildet ist.

3. Batteriemodul (100) nach Anspruch 2, wobei ein Rand der Rippe (112, 212) berarbeitet ist, um abgerundet zu sein.

4. Batteriemodul (100) nach Anspruch 2, wobei die Rippe (112, 212) aus einem elastischen Material hergestellt ist.

5. Batteriemodul (100) nach Anspruch 1, wobei die Endplatte (210) derart gebildet ist, dass die Konnektoraufnahmenut (111a, 111b) in einer Form eingelassen ist, welche einer Form des Konnektors (120) entspricht.

6. Batteriemodul (100) nach Anspruch 1, wobei die Endplatte (210) derart gebildet ist, dass die Konnektoraufnahmenuten (111a, 111b) in einer Mehrzahl bereitgestellt sind, und die Mehrzahl von Konnektoraufnahmenuten (111a, 111b) nebeneinander benachbart zueinander sind.

7. Batteriemodul (100) nach Anspruch 1, wobei die Endplatte (210) derart gebildet ist, um die Konnektoraufnahmenut (111a, 111b) mit der Leitungsaufnahmenut (214) zu verbinden.

8. Batteriemodul (100) nach Anspruch 1, wobei, in der Endplatte (210), die Konnektoraufnahmenut (111a, 111b) gebildet ist, um den Konnektor (120) derart aufzunehmen, dass eine Fläche des Konnektors (120), an welche ein Ende der Leitung (130) verbunden ist, in eine Richtung weg von dem Zellstapel (140) gerichtet ist.

9. Batteriemodul (100) nach Anspruch 1, wobei, in der Endplatte (210) die Konnektoraufnahmenut (111a, 111b) gebildet ist, um den Konnektor (120) derart aufzunehmen, dass eine Fläche des Konnektors (120), an welche ein Ende der Leitung (130) verbunden ist, zu dem anderen Ende der Leitung (130) gerichtet ist.

10. Batteriemodul (100) nach Anspruch 9, wobei die Endplatte (210) ferner eine Aufnahmeplatte (213) umfasst, welche sich erstreckt, um senkrecht zu einer Richtung weg von dem Zellstapel (140) zu sein, um einen Abschnitt des eingeführten Verbinders (120) zu schützen.

## Revendications

1. Module de batterie (100) comprenant :
un empilement de cellules (140) dans lequel une pluralité de cellules sont empilées ;
un cadre (150) dans lequel l'empilement de cellules (140) est logé ;
une plaque d'extrémité (210) configurée pour bloquer une ouverture du cadre (150) et disposée sur un côté et sur l'autre surface de l'empilement de cellules (140) ;
un connecteur (120) disposé à l'extérieur du cadre (150) pour connecter électriquement l'empilement de cellules (140) à un extérieur ; et
un fil (130) configuré pour connecter l'empilement de cellules (140) au connecteur (120),
dans lequel, dans la plaque d'extrémité (210), une rainure de logement de connecteur (111a, 111b) dans laquelle le connecteur (120) est logé est formée dans l'autre surface faisant face à une surface adjacente à l'empilement de cellules (140), et la plaque d'extrémité (210) comprend en outre une rainure de logement de fil (214), dans laquelle le fil est logé, dans l'autre surface faisant face à une surface adjacente à l'empilement de cellules (140).

2. Module de batterie (100) selon la revendication 1, dans lequel la plaque d'extrémité (210) comprend une nervure (112, 212) s'étendant dans une direction éloignée de l'empilement de cellules (140) à partir de la plaque d'extrémité (210) de sorte que la rainure de logement de connecteur (111a, 111b) soit formée.

3. Module de batterie (100) selon la revendication 2, dans lequel un bord de la nervure (112, 212) est traité pour être arrondi.

4. Module de batterie (100) selon la revendication 2, dans lequel la nervure (112, 212) est en un matériau élastique.

5. Module de batterie (100) selon la revendication 1, dans lequel la plaque d'extrémité (210) est formée de sorte que la rainure de logement de connecteur (111a, 111b) soit encastrée dans une forme correspondant à une forme du connecteur (120).

6. Module de batterie (100) selon la revendication 1, dans lequel la plaque d'extrémité (210) est formée de sorte que les rainures de logement de connecteur (111a, 111b) soient fournies en une pluralité, et la pluralité de rainures de logement de connecteur (111a, 111b) sont adjacentes les unes aux autres.

7. Module de batterie (100) selon la revendication 1, dans lequel la plaque d'extrémité (210) est formée de manière à connecter la rainure de logement de connecteur (111a, 111b) à la rainure de logement de fil (214).

8. Module de batterie (100) selon la revendication 1, dans lequel, dans la plaque d'extrémité (210), la rainure de logement de connecteur (111a, 111b) est formée de manière à loger le connecteur (120) de sorte qu'une surface du connecteur (120), à laquelle une extrémité du fil (130) est connectée, soit dirigée dans une direction opposée à l'empilement de cellules (140).

9. Module de batterie (100) selon la revendication 1, dans lequel, dans la plaque d'extrémité (210), la rainure de logement de connexion (111a, 111b) est formée de manière à loger le connecteur (120) de sorte qu'une surface du connecteur (120), à laquelle une extrémité du fil (130) est connectée, soit dirigée vers l'autre extrémité du fil (130).

10. Module de batterie (100) selon la revendication 9, dans lequel la plaque d'extrémité (210) comprend en outre une plaque de logement (213) s'étendant pour être perpendiculaire à une direction opposée à l'empilement de cellules (140) de manière à protéger une partie du connecteur (120) inséré.
